Europäisches Patentamt

European Patent Office

Office européen des brevets

(19)

(11) Publication number: 0 243 189
A1

# (12) EUROPEAN PATENT APPLICATION

(21) Application number: 87303599.2

(22) Date of filing: 23.04.87

(51) Int. Cl.⁴: G 06 F 13/28

(30) Priority: 23.04.86 GB 8609848

(43) Date of publication of application:
28.10.87 Bulletin 87/44

(84) Designated Contracting States:
AT BE DE ES FR GB IT NL SE

(71) Applicant: The British Petroleum Company p.l.c.
Britannic House Moor Lane
London EC2Y 9BU (GB)

(72) Inventor: Harrison, John Norman
British Petroleum Company p.l.c. Chertsey Road
Sunbury-on-Thames Middlesex TW16 7LN (GB)

Mottershead, Christopher John
British Petroleum Company p.l.c. Chertsey Road
Sunbury-on-Thames Middlesex TW16 7LN (GB)

(74) Representative: Ryan, Edward Terrence et al
BP INTERNATIONAL LIMITED, Patents Division Chertsey
Road
Sunbury-on-Thames Middlesex, TW16 7LN (GB)

(54) Data storage and transfer apparatus.

(57) A data storage and transfer apparatus comprises at least two addressable memories (1), (2) each having an address bus (5), (6). A data bus (4) links the memories. A data moving means (3) comprises two address generating means for generating source and destination addresses on the respective address buses to cause data to be transferred from one memory to the other.

FIG.1

**Description**

## DATA STORAGE AND TRANSFER APPARATUS

The present invention relates to computers, and in particular to high speed transfer of data from one area of memory to another.

It has been proposed to improve the speed at which data can be transferred between two memories, in a computer system, co-ordinated by an autonomous controller. One arrangement which is known in the art as Direct Memory Access (DMA) provides a means for data to be transferred directly to or from a processor memory on a cycle stealing basis without program intervention from the processor.

The existing methods of transferring data between memories involve storing data from one memory in a register in the transfer device and then transferring it in a separate operation to another memory. The necessity to carry out two separate transfer operations reduces the rate at which data can be transferred. One such arrangement is disclosed in GB 2 139 384.

It would be desirable to find a faster method of transferring data between memories.

This is of particular relevance to multiprocessor systems, wherein to improve the speed at which complex data manipulation can be carried out the data process is divided between a plurality of processing elements which simultaneously carry out processing steps. One arrangement which has been proposed for such a multi-processor computer is to have a controller which is responsible for coordinating the activities of the processing elements and for passing data to and from them. Such a computer is disclosed in for example US 3 537 074 and US 4 101 960 (R.A. Stokes et al).

According to the present invention a data storage and transfer apparatus comprises:

(a) at least two addressable memories each having an address bus,

(b) a data bus linking said memories by which data may be transferred from a first memory acting as a source memory to a second memory acting as a destination memory, and

(c) data moving means comprising

(i) first address generating means for generating a source address and placing it on the address bus of the first memory acting as a source memory so as to cause data to be placed on the data bus by the first memory, and

(ii) second address generating means for simultaneously generating a destination address and placing it on the address bus of the second memory so as to cause the data which has been placed on the data bus by the first memory to be written to an address in the second memory.

The present invention may be used for transfer of data in a single direction. In such an arrangement one memory is always a source memory and another memory is always a destination memory, and the first and second address generating means have only the functions set out above. However, preferably the data bus is bidirectional, the first address means is also capable of generating destination addresses for the address bus of the first memory, and the second address generator is capable of generating source addresses for the second memory so that transfer between the first and second memories is bidirectional. The data bus may link more than two memories so that data may be transferred between a source memory and at least two destination memories.

The memories required by the present invention are addressable memories capable of storing data in a plurality of individually addressable locations and capable of writing or reading the data to any given address from or to a data bus in response to an address supplied to the memory on an address bus. Such memories are standard articles of commerce.

It is a feature of the present invention that the data is not stored in an intermediate register in the circuitry which initiates the data transfer and determines the memory locations from which data is taken and to which it is transferred. This circuitry may be referred to as the data moving means. The data moving means is an address generating means for the memory from which data is transferred and one or more address generating means for the memories to which the data is transferred. If the same data from the data bus is to be stored in a number of memories simultaneously but all at the same address then only one address generator is required for this purpose.

Address generator circuits are well-known in the art and it is therefore not necessary to describe them in detail.

In one method of carrying out the invention the data moving means is provided with block transfer means for causing transfer of a block of data held at consecutive locations in the source memory to consecutive locations in a destination memory. The block transfer means comprises a count register for indicating the number of memory locations whose contents are to be transferred, a source address register, at least one destination address register, and means for incrementing the contents of the address registers to correspond to the next memory location in the block and for decrementing the count register, as the contents of each memory location are transferred until the count register contains zero and transfer of the block is completed.

The data in the block will most conveniently be in immediately consecutive memory locations whose addresses differ by one. It may be desirable to interleave the block with other blocks so that the memory locations of successive components of the block differ by an integer greater than one. In such a case the address registers in the data moving means are arranged so as to be incremented by the spacing between consecutive memory locations after each data transfer. The count register may be decremented by the same value as the address registers are decremented in which case the initial value of the count register will be the number of memory locations whose contents are to be transferred multiplied by the spacing between consecutive memory locations holding the block. It will generally be more convenient to set the initial value of the count register at the number of memory locations whose contents are to be transferred and to decrement the count register by one after each transfer.

Other methods of transferring blocks of data are possible. Thus a count register may be incremented from zero until its value is the same as the total number of memory location whose contents are to be transferred.

The memory locations whose contents are to be transferred need not have addresses which differ by a fixed amount. Other methods of automatically progressing through a succession of memory locations may be used.

In order to initiate the generation of the addresses and also to determine the addresses to be generated control circuitry will be required. The precise nature of such control circuitry will depend on the particular system in which the data transfer mechanism is used.

The present invention is particularly useful when applied to multiprocessor computers. Thus according to the present invention there is provided a multiprocessor computer comprising a controller and a plurality of processing elements each having a processor and addressable memory with an address bus wherein

(a) the controller is provided with an addressable data memory, with an address bus, for storing data to be transferred to or from the memories of the processing elements, and

(b) a data bus links the data memory to the memories of the processing elements such that data can be transferred from the data memory acting as source memory to at least one of the processing element memories acting as destination memory, and

(c) data moving means in accordance with the invention.

The above multiprocessor computer may be arranged so that data can also be transferred from a processing element memory, acting as source memory, to the data memory, acting as destination memory.

The present invention may be applied to a multiprocessor computer as disclosed in our copending application corresponding to International patent application GB 87/00093 (Case 6147/6326). Thus in the multiprocessor computer described above in this specification, the controller may also have, in addition to the data memory

(i) a control flow processor,

(ii) a control flow memory where instructions relating to control flow are stored,

(iii) an instruction memory where instructions relating to computation by the processing elements are stored,

(iv) means whereby the selection of computation instructions processed by the computation processor is determined in accordance with control flow instructions processed by the control flow processor,

and wherein the control flow processor controls the operation of the data moving means.

The invention will now be described in more detail with reference to the drawings in which

Figure 1 is a diagrammatic representation of the invention as applied to two memories and a data moving means

Figure 2 is a diagrammatic representation of the data moving means responsible for data transfer,

Figure 3 is a diagrammatic representation of part of a multiprocessor computer incorporating the invention,

Figure 4 is a diagrammatic representation of a controller for a multiprocessor computer incorporating the present invention.

Throughout this specification the following convention is used. The Boolean operator * represents the logical product or logical conjunction, i.e. A*B represents A AND B (also often represented as A.B). The Boolean operator + represents logical union or logical disjunction, i.e. A+B represents A OR B. Negation is represented by NOT, i.e. NOT FALSE is TRUE. In a given computer different signals, usually voltage levels, are used to indicate a binary one and a binary zero. The signal corresponding to binary 1 may be referred to as logic 1 level, while the signal corresponding to binary zero may be referred to as logic 0 level. The logic 1 level is frequently used to indicate a TRUE condition, which initiates some action. Thus a START line will cause some action to start when logic 1 appears on it but not otherwise. It is also possible to operate with inverse logic such that the presence of a logic 0 signal is required to initiate some action. Inverse logic signals are identified by / appearing as part of the identifier. Thus /START will only cause an action to start when it is at logic 0, and TRUE for this signal corresponds to logic 0.

The two memories (1) and (2) may be conventional, commercially available random access memories. The memory (1) is connected by data bus (4) directly to memory (2).

The circuit responsible for the transfer of data between the memory (1) and the memory (2) is indicated generally by (3) and is hereinafter referred to as the "data moving means". The data moving means (3) is connected to the memory (1) and the memory (2) by two address buses (5) and (6). The address bus (5) connected to the memory (1) may be referred to as the S/D (or "Source/destination") address bus and the address bus (6) connected to the memory (2) may be referred to as the D/S (or "Destination/Source") address bus. The address bus (5) is identified as the S/D bus because the description which follows is based on memory (1) being the source memory. However it is equally possible to transfer data from memory (2) to memory (1). Memory (1) then becomes the destination memory and bus (5) then provides a destination address instead of a source address. Similar considerations apply to bus (6).

Three control lines (8), (10), and (13) extend between the data moving means (3) and the memory (2). Three control lines (7), (9) and (13) extend from the data moving means (3) to the memory (1). Lines (8) and (10) are

3

used to indicate whether the exchange should take place from or to the memory n (2).

Lines (7) and (9) are used to indicate whether the exchange should take place from or to the memory (1). Line (13) is used by the memories (1) or (2) to signal that they are not ready to carry out the transfer of data.

Persons skilled in the art will be able to design suitable circuits for enabling the memories to respond to and generate the appropriate control signals and the circuits are therefore not described in detail in this specification.

The data moving means (3) is provided with two lines (11) and (12). Line (12) is used to initiate data transfer between (1) and (2) and line (11) is used to indicate the direction of transfer (from memory (1) to memory (2) or vice versa).

In order to initiate a data transfer external circuitry (not shown) must first of all select a particular memory as the target for the transfer. Line (11) is then used to signal to the data moving means (3) the direction of data transfer. The signals on the above mentioned lines may be given mnemonics as follows:

| line | mnemonic | |
|------|----------|---|
| 7 | /RDm | read from memory m |
| 8 | /RDn | read from memory n |
| 9 | /WRm | write to memory m |
| 10 | /WRn | write to memory n |
| 11 | TO | indicate direction of transfer ("transfer to") |
| 12 | GORQ | "Go request" |
| 13 | /GEX | "Go extend". |

For lines 7,8,9 and 10 reading or writing is enabled by logic 0 on the appropriate line. The suffix m indicates memory (1) and the suffix n indicates memory (2).

Setting line (11) to logic 1 in this embodiment indicates that the transfer will be from the memory m (1) to the memory n (2). Setting the line to logic 0 will indicate that transfer is to be from the memory n (2) to the memory m (1). In the description which follows line 11 (TO) is assumed to be set to logic 1 so that memory (1) is the source memory.

External circuitry (not shown) instructs the data moving means to start the transfer of a block of data by setting line (12) to logic 1. The operation of data moving means (3) will be described in more detail below but the result is that source and destination addresses are output on buses (5) and (6). Read and write signals are also sent to the memory (1) and the memory (2).

If memory (1) is not ready to transfer data then it advises the data moving means (3) by placing a signal on line (13). In the present embodiment line (13) is a control line indicating that data transfer can proceed. Logic 0 on this line indicates that data transfer may not proceed. Normally line (13) is maintained at logic 1 but can be pulled down to logic 0 level by either memory.

Assuming that the data transfer is to be from memory (1) to memory (2) then the data moving means (3) outputs a logic 0 on line (7) (/RDm) and a logic 0 on line (10) (/WRn). This will cause the memory (1) (memory m) to output a word of data on data bus (4). After a certain time interval the data moving means (3) completes the data transfer by returning the /WRn(10) and /RDm (7) signals to logic 1 level. The duration of the bus cycle (i.e. the time for which the word is maintained on the data bus) can be extended by memory (2) signalling on the /GEX line (13) that it is not ready to complete the transfer.

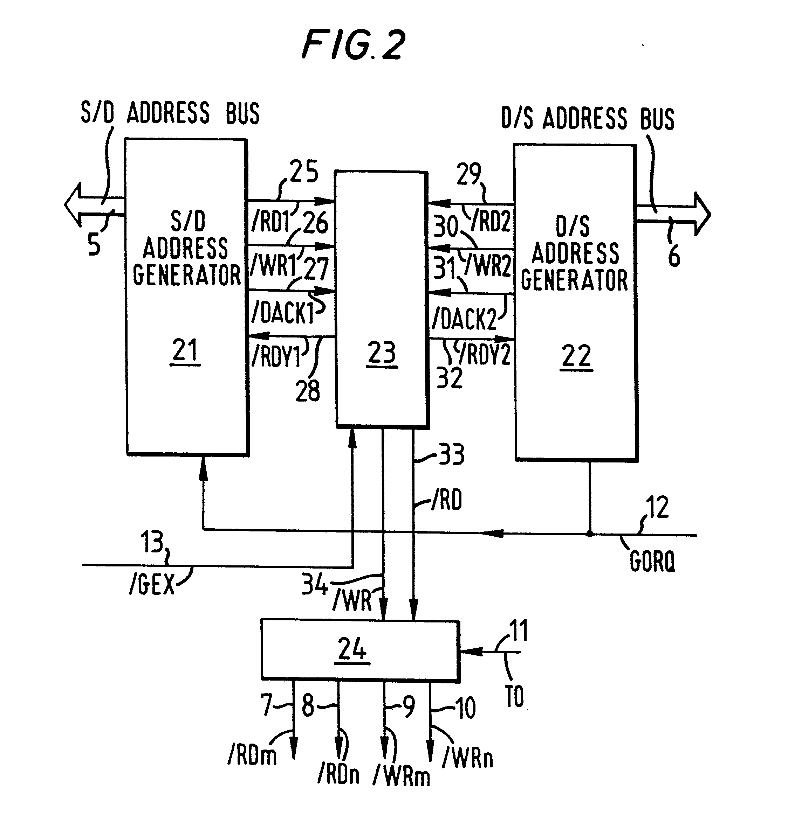

The source start address of the memory block in the memory (1) and the destination start address for the memory (2) are held in registers within the address generators (21) and (22) of Figure 2. The number of words to be transferred is written by external circuitry (not shown) to count registers within the address generators (21) and (22). After each word transfer the registers holding the S and D addresses in the address generators are incremented. The count registers in the address generators are decremented. The above transfer process is repeated until the count registers becomes zero, indicating that the required number of words has been transferred.

The memory (2) can at any time hold up the data transfer by holding the /GEX (13) signal at logic level 0. The data moving means will then hold the current data word on the bus until the memory (2) allows the process to continue by returning /GEX (13) to logic 1 again.

To transfer data in the reverse direction the process indicated above is followed except that the /RDn (8) line is first driven to logic 0, followed by the /WRm line (9).

The internal arrangement of the data moving means is shown in more detail in Figure 2. The two address generators (21) and (22) are connected to the address buses (5) and (6) respectively. S/D address generator (21) generates the source/destination addresses within the memory (1) and D/S address generator (22) generates the destination/source addresses within the memory (2).

The address generators are constructed from circuits containing so called "DMA" chips (Intel type 8237-2 used in this embodiment). The operation of the two address generators is synchronised by a programmable array logic ("PAL") chip (23) of type 16L8.

This chip receives read and write control signals from each address generator (/RD1 (25), /RD2 (29), /WR1 (26), and /WR2 (30)) and also two control signals (/DACK1 (27) and /DACK2 (31)) which go to logic 0 when the address generators are ready to transfer data. The chip outputs a control signal to each address generator, RDY1 (28) and RDY2 (32). These signals, when at logic 0 level cause the address generators to hold the current address until the signal returns to logic 1 level. The read and write control signals are also held in the same manner.

The PAL chip also outputs a read (/RD) signal (33) and a write (/WR) signal (34). The relationships between the various inputs and outputs to this PAL chip are governed by the following boolean equations which are programmed into the chip.

$$/WR = /WR1 + /WR2$$
$$/RD = /RD1 + /RD2$$
$$RTGO = /DACK1*/DACK2$$
$$RDY1 = /WR*/RD*RTGO*(NOT/GEX)$$
$$RDY2 = /WR*/RD*RTGO*(NOT/GEX)$$

The internal workings of the PAL chip can cause some lotical inversions, and the relationship between the equations and the outputs can be found with reference to a handbook detailing the internal workings of the 16L8 PAL.

The /WR and /RD signals are passed on to a logic circuit (24) which determines the signals to the memory (1) and the memory (2), depending upon which direction the data is to be moved. In the present embodiment, this is achieved using several PALs, but the net result is to give the logical equivalent of the following boolean equations.

$$/RDm = TO*/RD$$
$$/WRm = (NOT TO)*/WR$$
$$/RDn = (NOT TO)*/RD$$
$$/WRn = TO*/WR$$

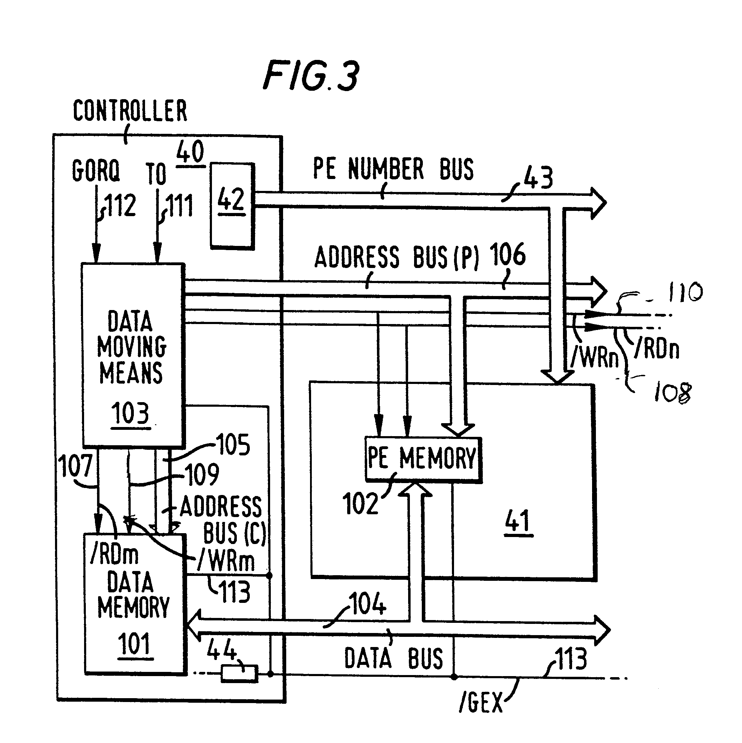

The application of the invention to a multiprocessor computer comprising a controller and a plurality of processing elements will now be discussed with reference to Figure 3.

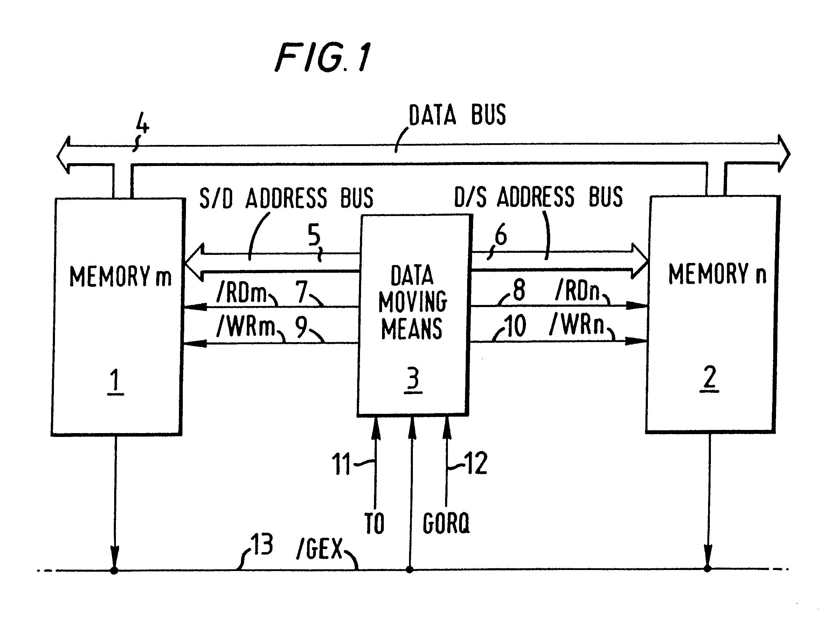

In order to indicate the relationship between the invention as described in Figures 1 and 2 numbers differing by 100 from those used in Figures 1 and 2 will be used to identify parts of the multiprocessor computer having similar functions to corresponding parts in Figures 1 and 2.

The multiprocessor computer comprises a controller (40) and a plurality of processing elements (PEs) (41) of which only one is shown. The controller has a data memory (101) and the processing element has a local memory (102), together with a processor and other circuitry well-known in the multiprocessor art. The controller (40) has a data moving means or mover unit (103). This is responsible for transferring data between data memory (101) and PE local memory (102) along an 8 bit data bus (104) linking the data memory (101) to the local memories (102) of all the PEs.

The mover unit (103) is connected to the data memory (101) and the PE memory (102) by two 16 bit address buses (105) and (106). The address bus (105) connected to the data memory (101) may be referred to as the C (or "controller") address bus and the address bus (106) connected to the PE memory (102) may be referred to as the P or "PE"address bus.

Three control lines (108), (110) and (113) extend between the data moving means (103) and the PEs. Three control lines (107), (109) and (113) extend from the data moving means (103) to the memory (101). Lines (108) and (110) can be used to indicate whether the exchange is taking place from or to the PE memory. Line (113) is used by the PE to signal that it is not ready to carry out the transfer of data.

Lines (107) and (109) are used to pass signals from the data moving means to the data memory to indicate whether the data memory is putting out data on the data bus (104) to a PE or is receiving data from a PE via the data bus (104).

Within the controller (40) is an 8-bit latch (42) connected to an 8-bit bus (43) which is connected to all the PEs. Signals put out on this bus are used to identify the PE to which information is to be transferred. A different binary number is assigned to each processing element and circuitry in the PE will recognise when the appropriate binary number is being put out on the bus (43) and will cause the PE to be enabled to as to respond to signals from the data moving means.

By putting a special number on bux (43) all the PEs can be placed in a state to receive data. Common data can therefore be transferred to all PEs simultaneously thus avoiding the waste of time involved in loading each PE memory in turn.

The controller (40) also comprises a controller processor (not shown in Figure 3) for controlling the operation of the data moving means. The data moving means (103) is provided with two lines (111) and (112) from the controller processor which are used by the controller processor to initiate data transfer line (112) and to indicate the direction of transfer line (111).

In order to initiate a data transfer the controller must first of all select a particular processing element as the target for the transfer. This is done by the controller processor writing to the 8-bit data latch (42) which then outputs the PE reference number bus (43). The controller processor also initialises the address and count registers within the mover unit (103). Line (111) is then used to signal to the data moving means (103) to indicate the direction of data transfer. Setting line (111) at logic level 1 in this embodiment indicates that the transfer will be from the controller to the PE. Setting the line to logic 0 will indicate that transfer is to be from the PE to the controller.

The controller processor instructs the data moving means to start the process of moving a block of data by setting line (112) to an appropriate level. In the present embodiment a logic 1 signal on line (112) is a GORQ (go-request). The internal operation of the data moving means has already been described above. The result is that the C and P addresses are output on buses (105) and (106). Read and write signals are also sent to the PE and the data memory. In the present embodiment lines (108), (110), (107) and (109) are read or write lines identified as /RDn, /WRn, /RDm and /WRm respectively. Reading or writing is thus enabled by placing logic 0 on the appropriate line.

The PE (41) may advise the data moving means (103) that it is not ready to transfer data by placing a signal on line (113). In the present embodiment line (113) is a data-transfer control line identified as /GEX (113) and logic 1 on this line indicates that data transfer may proceed. Normally line (113) is maintained at logic 1 by a voltage source through resistor (44) but can be pulled down to logic 0 level by any PE, so causing the time for which a byte remains on the data bus to be extended.

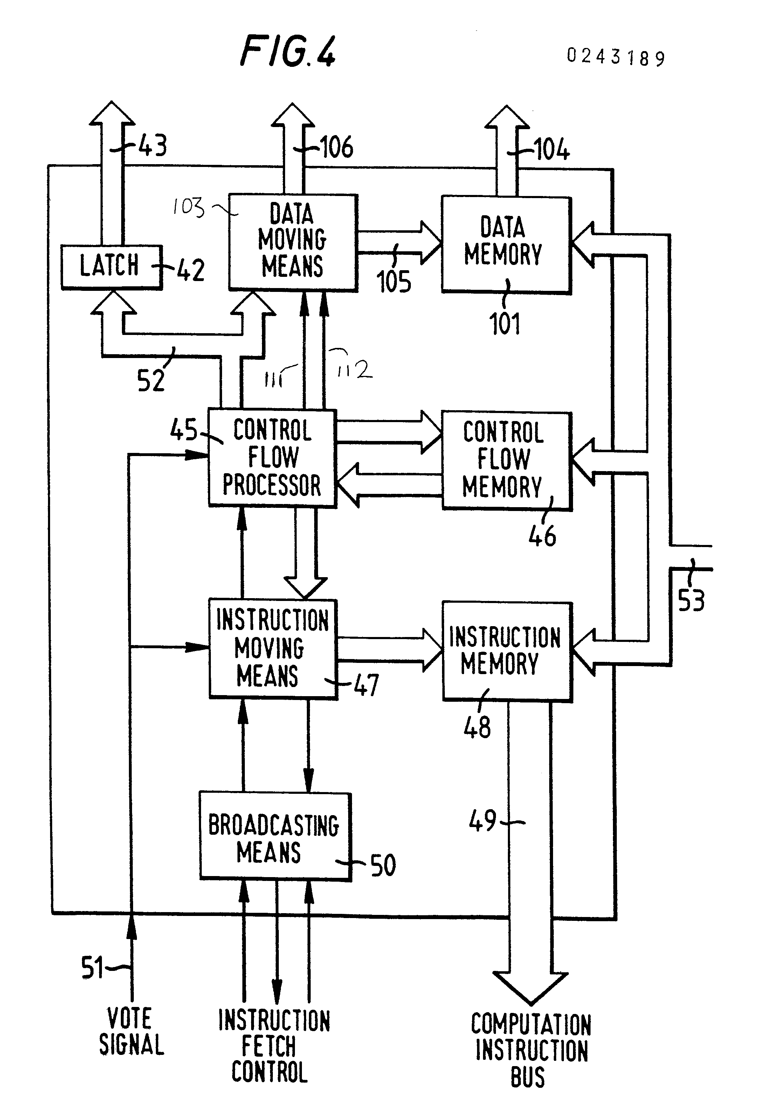

The application of the invention as described in relation to Figures 2 and 3 to a multiprocessor computer as described in our copending application corresponding to International patent application GB 87/00093 (Case 6147/6326) can be seen from Figure 4.

A control flow processor (45) is linked to a control flow memory (46) from which it can obtain instructions for processing. The control flow processor (45) is linked to an instruction moving means (47) which in turn causes instructions held in instruction memory (48) to be passed to the PEs on bus (49). The instruction moving means is linked to a broadcasting means (50) linked to the processing elements by which the dispatch of instructions to the PEs is synchronised.

A line (51) enables the PEs to cause changes in the control flow in a program executed by the multiprocessor computer as a result of computations carried out by the PEs.

In accordance with the invention, the control flow processor is linked to 8 bit latch (42) and to the data moving means (103) by a bus (52) and to the data moving means (103) by the GORQ line (line 112) and the TO line (line 111). Bus (52) supplies PE identification numbers to latch (42) and address information to data moving means (103). The data memory (101) the control flow memory (46) and the instruction memory (48) are all connected to a bus (53) by which data and instructions can be loaded into the memories e.g. from a host computer.

**Claims**

1. A data storage and transfer apparatus which comprises:
(a) at least two addressable memories each having an address bus,
(b) a data bus linking said memories by which data may be transferred from a first memory acting as a source memory to a second memory acting as a destination memory, and
(c) data moving means comprising
(i) first address generating means for generating a source address and placing it on the address bus of the first memory so as to cause data to be placed on the data bus by the first memory, and
(ii) second address generating means for simultaneously generating a second address and placing it on the address bus of the destination memory so as to cause the data which has been placed on the data bus by the first memory to be written to an address in the second memory.

2. A data storage and transfer apparatus according to claim 1 wherein
(i) the data bus is capable of transferring data from the second memory to the first memory,
(ii) the second address generating means is also capable of generating a source address and placing it on the address bus of the second memory so as to cause data to be placed on the data bus by the second memory, and
(iii) the first address generating means is also capable of simultaneously generating a destination address and placing it on the address bus of the first memory so as to cause the data which has been placed on the data bus by the first memory to be written to an address in the first memory.

3. A data storage and transfer apparatus according to either of claims 1 or 2 wherein the data bus links at least three memories such that data may be transferred from a source memory to at least two destination memories.

4. A data storage and transfer apparatus according to any of claims 1 to 3 wherein the data moving means comprises block transfer means for causing transfer of a block of data held at consecutive locations in a source memory to consecutive locations in a destination memory, said block transfer means comprising a count register for indicating the number of memory locations whose contents are to be transferred source address register, at least one destination address register, and means for incrementing the contents of the address registers to correspond to the next memory location in the block and for decrementing the count register as the contents of each memory location are transferred until the count register contains zero and transfer of the block is completed.

5. A multiprocessor computer comprising a controller and a plurality of processing elements each having a processor and addressable memory with an address bus wherein

(a) the controller is provided with an addressable data memory, with an address bus, for storing data to be transferred to or from the memories of the processing elements, and

(b) a data bus links the data memory to the memories of the processing elements such that data can be transferred from the data memory acting as source memory to at least one of the processing element memories acting as destination memory, and the computer has

(c) data moving means comprising

(i) first address generating means for generating a source address and placing it on the address bus of the data memory so as to cause data to be placed on the data bus by the data memory, and

(ii) second address generating means for simultaneously generating a destination address and placing it on the address bus of a processing element memory so as to cause the data which has been placed on the data bus by the data memory to be written to an address in the processing element memory.

6. A computer according to claim 5 wherein data can be transferred from a processing element memory acting as source memory to the data memory acting as destination memory.

7. A multiprocessor computer according to either of claims 5 or 6 wherein the controller has, in addition to the data memory,

(i) a control flow processor,

(ii) a control flow memory where instructions relating to control flow are stored,

(iii) an instruction memory where instructions relating to computation by the processing elements are stored,

(iv) means whereby the selection of computation instructions processed by the computation processor is determined in accordance with control flow instructions processed by the control flow processor, and wherein the control flow processor controls the operation of the data moving means.

7

# FIG.1

DATA BUS

4

S/D ADDRESS BUS        D/S ADDRESS BUS

MEMORY m    5    DATA    6    MEMORY n

/RDm  7    MOVING    8    /RDn

/WRm  9    MEANS    10    /WRn

1    3    2

11    12

TO    GORQ

13    /GEX

0243189

FIG.2

0243189

# FIG.3

FIG.4

0243189

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 095 363 (PITNEY BOWES, INC.) * Page 38, line 1 - page 39, line 5; page 5, line 26 - page 6, line 6 * | 1-6 | G 06 F 13/28 |
| | --- | | |
| A | EP-A-0 088 982 (HITACHI LTD) * Page 22, line 16 - page 23, line 11 * | 1 | |
| | --- | | |
| A | US-A-4 428 044 (LIRON) * Column 5, lines 37-65; figure 2 * | 1,2 | |
| | --- | | |
| A,D | GB-A-2 139 384 (TEXAS INSTRUMENTS LTD) | | |
| | ----- | | **TECHNICAL FIELDS SEARCHED (Int. Cl.4)** |
| | | | G 06 F |

The present search report has been drawn up for all claims

| Place of search | Date of completion of the search | Examiner |
|---|---|---|
| THE HAGUE | 08-07-1987 | TIBAUX M.J.P.G. |